# EUROPEAN PATENT SPECIFICATION

(11) **EP 2 032 941 B1**
(45) Date of publication and mention of the grant of the patent: **02.12.2020**
(21) Application number: 07748516.7
(22) Date of filing: 24.05.2007
(51) Int. Cl.: G01C 7/04, G01C 23/00, G07C 5/08

(54) **DEVICE AND SYSTEM FOR CLASSIFYING VEHICLE SURROUNDINGS**
EINRICHTUNG UND SYSTEM ZUM KLASSIFIZIEREN EINER FAHRZEUGUMGEBUNG
DISPOSITIF ET SYSTÈME DE CLASSIFICATION D'ENVIRONNEMENT DE VÉHICULE

(30) Priority: 26.05.2006 SE 0601176
(43) Date of publication of application: 11.03.2009
(73) Proprietor: Scania CV AB (publ), 151 87 Södertälje (SE)
(72) Inventor: BRÅKENHIELM, Erik, S-112 52 Stockholm (SE); ANDERSSON, Jon, S-151 46 Södertälje (SE)
(74) Representative: Scania CV AB
(86) International application number: PCT/SE2007/050355
(87) International publication number: WO 2007/139495

(56) References cited:
- EP-A1- 1 605 419
- EP-A2- 0 747 671
- EP-A2- 0 817 134
- WO-A1-2006/008731
- JP-A- 2003 051 093
- US-A- 5 266 948

## Description

### Field of the invention

The present invention relates to systems for classifying the surroundings in which a vehicle travels, and especially to a device for, during traveling, classifying at least a part of a distance a vehicle travels, according to claim 1.

### Background of the invention

When driving heavy vehicles, such as trucks, buses and the like, the impact of vehicle economy has, in time, gained an increasing effect on the profitability in the business in which the vehicle is used. Except for the costs of acquiring the vehicle, the largest items of expenditure for a vehicle consist of fuel costs and service costs. These costs are often interconnected, i.e. a vehicle that is heavily used both consumes more fuel and is exposed to greater wear, with increasing service costs as a consequence. An existing problem for those companies that use heavy vehicles in their businesses is, however, a difficulty to establish which part of the fuel consumption that, for example, results from incautious driving, and which part that results from unfavorable traffic surroundings, such as extremely undulated ground and/or urban environment. Another example where said need arises is, that even if, e.g., a leasing company can base the leasing premium on the surroundings in which surrounding the vehicle is to be used, e.g., primarily urban environment or primarily freeway environment, it is, however, difficult to control that the actual use also corresponds to the pledged use.

Consequently, there is a need to be able to determine the type of traffic environment in which a vehicle is traveling or has been traveling in, and in the prior art there are solutions that to a greater or smaller extent can determine the traffic environment in which a vehicle is present. A plurality of these systems use a positioning system to indicate on a previously downloaded map the current position of the vehicle or the positions where the vehicle has been during traveling. This map can, apart from purely geographical data, also contain information about speed limit regulations, weather etc. An example of such a system is described in EP1605419 A1 which refers to a probe car system where a device, which is mounted on a travelling vehicle, records a travelling path. The travelling path and measurement information, e.g. speed and fuel consumption, is transmitted from the vehicle to a center where the data is analyzed for use in generating road traffic information. A road segment at which the measurement information is measured is identified from the travelling path. However, far from all vehicles are equipped with expensive positioning systems and the vehicles sometimes even lack map information completely.

Another type of solution seeks to describe the maneuvers the driver has performed by studying sequences of extreme points in accelerations. Even if this method is capable of indicating how often and how much a driver uses the accelerator pedal, this method does not reveal anything about the reasons for the accelerations.

Accordingly, there is a need for a device that in a correct manner can describe and store the geometrical environment in which a vehicle is present or has been in, and thereby, in a correct manner describe the traffic environment that is at hand.

### Summary of the invention

It is an object of the present invention to provide a device for, during travel with a vehicle, determining the type of at least part of the distance the vehicle is traveling that solves the above problem.

This and other objects are obtained according to the present invention by means of a device according to claim 1.

According to the present invention, it is provided a device for, during traveling with a vehicle, determining the type of a distance of a way along which the vehicle is traveling, wherein the distance is arranged to be divided into segments. The device comprises means for determining that a segment has been started, means for determining a reference direction of movement at the start of the segment, means for receiving at least one direction parameter value, which constitutes a representation of the direction of movement of the vehicle, or by which a representation of the direction of the movement of the vehicle can be determined, means for determining if the vehicle has reached the end of the segment, and means for determining the type of the segment from said received direction parameter values.

This has the advantage that the journey of the vehicle can be divided in segments of different types, (for example right-hand turn, left-hand turn, right-hand curve, left-hand curve, straight stretch, roundabout, top of a hill, valley, crossing, right-hand turn in crossing, left-hand turn in crossing, flat road, uphill slope, downhill slope) which in a simple manner can be type determined according to the present invention to allow classification of the surroundings of the vehicle.

By determining the type of a plurality of consecutive or adjacent segments, a good classification of the distance can be performed based on said type determined segment. The classification can, for example, consist of idle running, power take off (PTO), marshalling, queue, city centre, urban area, undulated and/or straight or curved road, straight and level or undulated road.

Each segment type can be stored with an identity for the segment, e.g. the consecutive order number of the segment. This has the advantage that the type of the segment for all of, or parts of the road on which a vehicle is traveling, can be stored and evaluated afterwards.

Said change of direction can be horizontal and/or vertical. This has the advantage that the journey of the vehicle can be described in three dimensions.

For each segment, the traveled distance of the vehicle during the segment (arc length), a radius for the performed movement of the vehicle during the segment, and/or the momentary and/or average speed of the vehicle during the segment can be calculated. This has the advantage that a very accurate description of the surroundings can be estimated. This also allows for a determination of the driver's ability to handle a specific segment by comparing how fast/smooth the driver has performed/passed a segment with predetermined criteria.

### Brief description of the drawings

Fig. 1 schematically illustrates a control system for a vehicle where the present invention advantageously can be utilized.
Fig. 2a-b illustrates an exemplary device according to the present invention.
Fig. 3 illustrates an example of a surrounding of a vehicle.
Fig. 4 illustrates an example of an output signal from a gyro mounted on a vehicle.

### Detailed description of exemplary embodiments

In this description, the term vehicle internal sensors means sensors that only obtains data from the relative movements of the vehicle, i.e. changes in movements from one time to another, and which do not use information from external systems, such as positioning systems or map databases. Such vehicle internal sensors can, for example, consist of lateral acceleration sensors, i.e. sensors delivering signals with which the rate of change of the vehicle speed in the lateral direction can be determined, for example in order to determine whether the vehicle runs the risk of tipping over due to the driver performing an incautious maneuver. Furthermore, the sensors can comprise wheel speed sensors, i.e. sensors for delivering signals with which the rotation speed of the wheels and traveled distance can be determined, steering angle sensors that deliver signals with which the angle of the steering wheels in relation to the longitudinal axis of the vehicle can be determined, and sensor means for delivering signals from which the yaw rate, i.e. how quickly the vehicle turns, can be calculated.

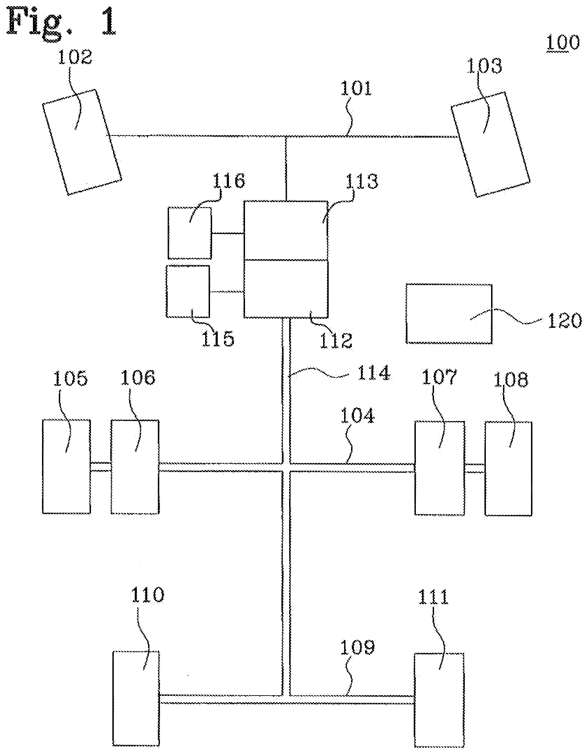

In fig. 1 is schematically illustrated a control system for a vehicle 100 with which the present invention can be utilized. The vehicle 100 comprises a front shaft 101 with steering wheels 102, 103, a rear drive shaft 104 with driving wheels 105-108, and a rear pressure equalizer shaft 109 with wheels 110, 111. Furthermore, the vehicle 100 contains an engine 113 connected to a gear box 112, which drives the drive shaft 104 by means of an output shaft 114 from the gear box.

Gear box 112 and motor 113 are controlled by control units 115, 116, respectively, which are controlled by a main control unit 117. The Engine Management System (EMS) 116 controls the motor functions of the vehicle, which, for example, can consist of fuel injection and engine-brake. The control is based on a number of input signals, which can consist of signals from (not shown) throttle controls (the position of the accelerator pedal), speed sensor and brake management system. The Gearbox Management System (GMS) 115 controls the gear functions, wherein, when using an automatic gearbox, the gear shifting can be controlled based on an input signal from speed sensors, in manual gear shifting the shifting can be controlled from an input signal from a gear selector (gear shift lever).

Furthermore, the vehicle contains a Brake Management System (BMS) 120, which controls the brake functions of the vehicle, such as automatic calculation of the load so that a given pedal position always can result in the same brake effect regardless of the load. The brake management system sends control signals to system modules (not shown) dispersed on the chassis, where electrical control signals are used, e.g. to adjust brake pressure.

A vehicle of the kind shown in fig. 1 includes, except for the above, typically a number of additional control units, see for example WO01/86459 A1. Therefore, the above described control units constitute mere examples of what can exist in a vehicle. As is appreciated by a person skilled in the art, two or more of the above described control units can, of course, be integrated in one single control unit.

As was mentioned above, it is increasingly important to be able to determine what the surroundings, or the geometry, looks like for a traveling vehicle in a correct manner, e.g., in order to be able to evaluate the surroundings in which the vehicle has been traveling and the fuel consumption in relation to the surroundings, or to be able to evaluate the driver's ability to drive the vehicle in a cost-effective manner.

The present invention provides a device that allows a good evaluation of the above and other parameters. According to the invention, a distance along which the vehicle travels is divided into segments, where each segment is constituted by a specific element such as a right-hand turn, left-hand turn, right-hand curve, left-hand curve, or a straight stretch. This division into segments is preferably performed automatically during traveling, by way of the device according to the invention detecting when a segment is started and when it is finished, and determining a type of the segment. This detection will be described more in detail below. Except for the above basic elements a plurality of consecutive segments can, as also will be explained below, define a complex element such as a roundabout, which (in right-hand traffic) is characterized by a short right-hand turn, followed by a shorter or longer left-hand turn, followed by an additional short right-hand turn.

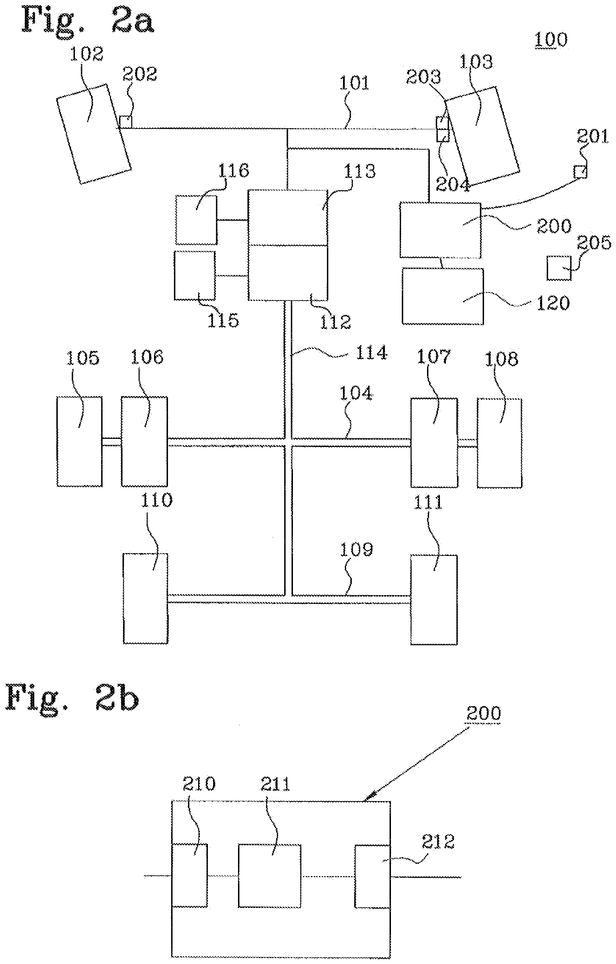

The invention will be described more in detail with reference to fig. 2a-b, wherein in fig. 2a the vehicle in fig. 1 is shown as provided with a device 200 according to the invention.

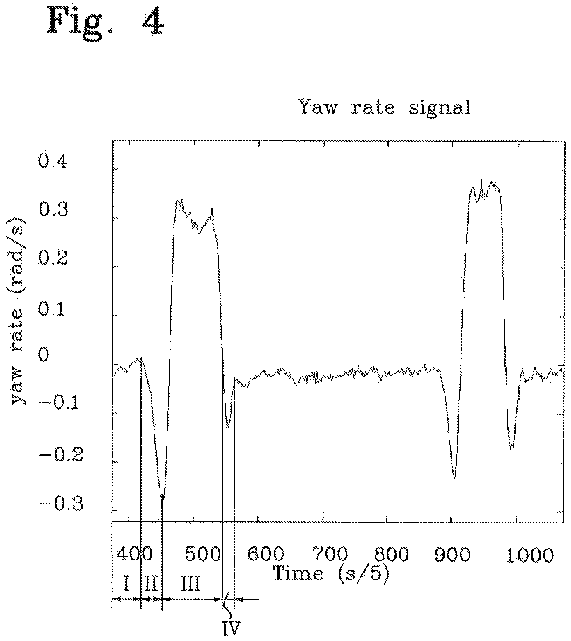

The device 200 includes means for receiving signals generated by vehicle internal sensor means, which, according to the above, e.g. can consist of signals from a lateral acceleration sensor 201, wheel speed sensors 202-203, from which the acceleration of the vehicle can be derived, a steering angle sensor 204, and sensor means 205 for delivering the vehicle yaw rate, or signals from which the yaw rate can be calculated. In the illustrated exemplary embodiment, a gyro 205 is used to obtain information about the yaw rate of the vehicle (speed of the change of direction). By means of the gyro, it can be decided, in every point, how much the vehicle turns, i.e. the yaw rate. When using a gyro, this information is usually obtained as expressed in radians per second. In fig. 4 a typical output signal from a gyro is illustrated, which will be explained more in detail below.

Instead of using a gyro it is, however, possible to obtain the yaw rate from other vehicle sensors, for example said wheel speed sensors 202-203, whereby the relative difference in speed between the wheels can be used to calculate the yaw rate.

Furthermore, the total change of direction for the vehicle during a given time interval can be obtained by means of integration of the yaw rate over the said time interval. This change of direction can either be positive, negative or near zero, where positive change and negative change represents a change of direction to the right or to the left, respectively (or the other way around). In this manner, three different basic segment types for a distance along which a vehicle is traveling can thus be defined: right-hand turn, left-hand turn and straight ahead, respectively.

By continuously dividing the travel of the vehicle into segments of these types, and storing the types for consecutive segments, an analysis of the surroundings of the vehicle can be made. This analysis can be performed substantially in "real time" by evaluating the n last segments, or afterwards, whereby parts of or the whole journey of the vehicle can be analyzed.

The device 200 according to the invention is shown more in detail in fig. 2b, and comprises means 210 for receiving signals from above-mentioned sensors and, if required, converting these signals to a format adapted for a data processing unit 211. The said means 210 can, for example, consist of a point of connection for each desired sensor, respectively, where different sensors can have different interfaces. Therefore, the device can comprise means, such as A/D-converters or receivers for receiving of wirelessly transmitted sensor signals, for converting signals in these different formats to a common format, which is adapted for said data processing unit 211. Alternatively, said means 210 can constitute a data bus connection for the reception of the sensor signals by means of a data bus, such as, for example, in any of the data bus formats CAN (Controller Area Network), TTCAN or FlexRay, in which the sensor signals can be transmitted in a common data transmission format. The sensor signals can either be provided in a desired data bus format directly by the sensor means, or by (not shown) control unit(s). When said data processing unit 211 has received sensor signals it can, by means of appropriate calculation determine that a segment is started based on signals received from one or more of said side acceleration sensor 201, wheel speed sensors 202-203, steering angle sensor 204, and gyro 205. Said data processing unit 211 can, for example, consist of a processor, which is controlled by means of operation instructions, such as a computer program generated by means of an appropriate programming language, and being stored in a storage means, said storage means being built-in or connected to the processor. Said storage means can, for example, consist of one or more from the group: ROM (Read-Only Memory), PROM (Programmable Read-Only Memory), EPROM (Erasable PROM), Flash-memory, EEPROM (Electrically Erasable PROM). The device 200 can consist of a data processing unit with both integrated memory and integrated bus interface for a data bus of the above type and therefore be constructed in a very compact manner. The device 200 further comprises output means 212 for output of processed data, for example for continuously transferring data to a fleet management central that is common to a plurality of vehicles, or to a display means in the vehicle, such as a display, or sound reproducing means, such as a loudspeaker, for feedback to the driver of the vehicle. The performed determination of whether a segment is started can, for example, be performed in such a manner that it is determined that the yaw rate exceeds a certain predetermined threshold value, or that a change of direction in a same direction has been in progress for a certain time. The start of the segment can, for example, also be initiated by a change in the sign of the change of direction, or that the yaw rate falls below a certain threshold value from a higher value (for example when the end of a curve transcends into a straight stretch). When it is determined that a segment is started, a reference direction of motion is determined for the segment. This reference direction of motion can, e.g., consist of the current direction of motion of the vehicle. This reference direction of movement must not in any way be absolute, but is merely used to determine the relative change of direction of the vehicle during the segment. However, as an alternative to the vehicle's direction of movement, an absolute direction can also be used as a reference direction of movement, such as compass north. During the segment, the device 200 continuously, or with certain, or predetermined intervals, receives parameter values which constitutes a representation of the direction of the vehicle, or with which a representation of the direction of the vehicle can be determined. In this example, yaw rate signals are obtained from the gyro as above, for example via the above mentioned data bus. When the device receives a parameter value, it is compared with one or a plurality of previous values to determine whether the segment is considered to be finished. If it is determined that the segment is not finished, the gathering of parameter values is continued, which values can be stored in internal storing means or storage means connected to the device, such as a computer memory of any of the above mentioned types, or a volatile memory such as a RAM memory, until the segment is considered to be finished. At the same time as the gathering of parameters, or when the segment is finished, the yaw rate is integrated to obtain the absolute change of angle the vehicle undergoes during the segment. The obtained change of angle is then used to determine the type of the segment to be any of the above elements. As is realized, the determination of the type can therefore be performed already during a segment, as soon as a sufficient number of parameter values has been obtained. The determination of the type can, for example, be performed by comparing the obtained change of angle with a table of different change of direction intervals, which represents a respective element type.

As soon as a segment is finished, this can automatically mean the beginning of the next, i.e. the start of a segment can be determined as the point where the preceding segment is finished. In this manner, the whole or parts of the journey of a vehicle can be divided into segment of different types. Further, the device can be arranged to store the types of the different segments, preferably with an identity for each segment, respectively, which identity in its simplest embodiment can consist of a consecutive number, i.e. segment 1 obtains no. 1, segment 2 obtains no. 2, etc.

The number of segments of a certain type can then be used to classify the surroundings of the vehicle. For example, many straight stretch segments can be interpreted as if the vehicle has been traveling a lot on motorway.

However, the present invention is even more to advantage if additional data is collected and used together with the determination of segment type. For example, traveled distance can be used in the evaluation. The number of segments of a certain type, for example right-hand turns and left-hand turns with greater angles than a reference angle can then be compared with the traveled distance of the vehicle, to determine the type of surrounding in which the vehicle has been traveling, such as urban environment or freeway. The element concentrations can also be compared for different sections of the distance to examine whether the vehicle has been in different surroundings during the journey.

An additional opportunity to enhance the quality of the information is to combine the above-mentioned information with speed information of the latest traveled distance, or the time the vehicle has consumed when traveling a certain distance. As shown in fig. 2 and as stated above, signals can be received from, e.g., wheel speed sensors 202-203. From these signals can, apart from the distance the vehicle has traveled during the segment, also the speed of the vehicle be calculated. By, for every started segment, not only saving segment type (straight, left, right) according to the above, but also the total distance the vehicle has traveled during the segment (arc length) and the total angular change the vehicle has performed during the segment, a far more sophisticated description of the surroundings of the vehicle can be obtained, and, accordingly, a more certain evaluation of whether, for example, the vehicle is in an urban environment, freeway environment, if the vehicle is idle running or in a queue, can be made. For example, if the vehicle has taken many 90° turns in combination with low average speed and the vehicle has made a plurality of stops during the last couple of minutes, one can with increasing certainty determine that the vehicle is in an urban environment.

Furthermore, from arc length and change of angle, the radius of the current segment can be obtained via a simple geometrical calculation, whereby the radius can be used when deciding whether an element constitutes a turn in a crossing (short radius) or a freeway curve (long radius).

Instead of storing the length of the segment (arc length) as described, alternatively, the time it has taken for the to vehicle moves through the segment and/or the speed of the vehicle during the segment can be used to describe the element.

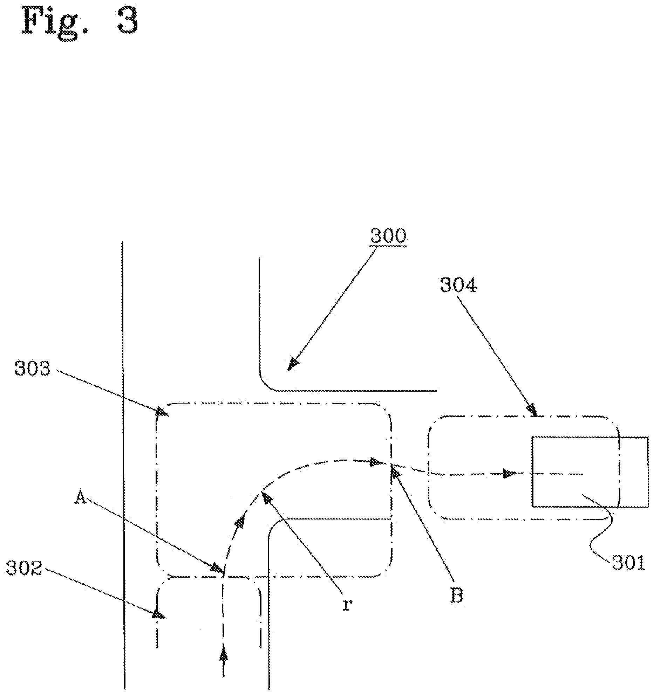

In fig. 3 is illustrated an example of a way of dividing a section into segments. In the figure is pictured a road crossing, more specifically, a T-intersection 300. As shown in the figure, a vehicle 301 has just performed a right-hand turn. Before the vehicle 301 reached the intersection, the vehicle was in a segment 302, being a straight stretch segment. When it later in point A was established, for example by the above threshold value, that the vehicle has initiated the right-hand turn, the straight stretch 302 was finished at the same time as a right-hand turn segment 303 with the radius r was initiated. As early as when the vehicle has reached only a little bit into a turning segment such as the right-hand turn segment 303, the type of segment can be determined and also the radius r. When the right-hand turn was finished in the point B, where once again a threshold value for the change of direction/the speed of the change of direction could be used, segment 303 was finished, whereby the length of the segment and change of angle for the segment was stored, whereafter another straight stretch segment 304 was initiated.

By means of information about the radius of the curve for a given segment a good classification of the traffic environment can be performed. Straight road is naturally illustrated by the segment being of the type "straight" (i.e. the radius r -> ∞). For every segment that has been classified as a curve (right or left), the radius can be determined and stored.

In order to be able to perform a good classification of the surroundings of the vehicle, known geometrical data about actual traffic environments can be used in order to classify curves in a correct fashion, for example as a freeway curve or a turn in a crossing. For example, as previously mentioned, a turn in a crossing constitutes a substantial change of direction in combination with a short arc length (small radius). Each crossing can consequently not only be detected, but it can also be determined whether the vehicle turned left or right and, furthermore, with which angle, radius and arc length.

As was mentioned above, a plurality of consecutive segments can also be used to classify more complex structures. This is exemplified with reference to fig. 4, where a typical output signal from a gyro is depicted, and which in digital form can be treated by the data processing unit in the device 200 according to the following. The Y-axis shows the yaw rate in positive and negative direction, while the X-axis represents time. When the vehicle is traveling straight ahead, the gyro signal looks like in interval I. Preferably, a threshold value is set where yaw rates that do not exceed the threshold value represents driving straight ahead. In the interval II the yaw rate is greater than the threshold value and negative, which means that the vehicle is performing a right-hand turn. This right-hand turn is immediately followed, the interval III, by a left hand turn (yaw rate > 0) to, in the interval IV, once again perform a slight right-hand turn. This sequence is typical for a vehicle taking a left-hand turn in a roundabout, and, consequently, sign studies of different traffic elements between two traffic elements of the type "straight" with sufficiently long arc lengths can be used to detect whether a series of detected elements describes a roundabout. Alternatively, a roundabout can, of course, be divided into its different segments; entry, circulation and exit segments, respectively.

Furthermore, the curvature for an arbitrary road can be determined from studies of the curve radiuses of the road. When using a gyro, very long radiuses can be detected, in the order of magnitude of 600 m or more, causing also the length of a segment to vary from a few meters or less to curves or straight stretches of up to a thousand meters. Thanks to the possibility of obtaining a very accurate representation of the segments, it is therefore possible according to the present invention to obtain a very accurate representation of the surroundings in which a vehicle travels, and how the surroundings the vehicle has been traveled in, varies. It is, for example, possible to see for how long time of a journey the vehicle has been in an urban environment, freeway environment and/or motorway environment.

So far, the movements of the vehicle has only been described in the lateral direction, but the invention is however also applicable to vertical movements. With knowledge of the current motor torque, motor friction, total gear ratio, drive wheel radiuses, acceleration, and vehicle mass of the vehicle, a sum of the resultant of all outer forces having an impact on the vehicle (such as roll resistance, air resistance and gravity) can be determined. This sum is called propulsion resistance herein. By means of known models for rolling as well as air resistance the contribution of the gravity to the propulsion resistance can be estimated, and thereby the inclination of the road can be described. Except for this method of estimating the inclination, there are many others in the prior art, of which a plurality can be used together with the present invention. In other words, the actual inclination of the road in relation to the horizontal plane can be determined at every given time. By studying historical variations in the inclination, the undulation of the road can also be determined, and divided in different inclination segments. Together with distance or time the undulation for a road segment can then be determined. Besides determining the inclination of the road, the information can also be used to detect special cases in inclinations; tops of hills and valleys, these are indicated as changes of sign in the inclination.

An example of an inclination estimation device is described in the Swedish Patent Application 0600370-1, "Metod for bestämning av lutningen for en vag (in English: Method for estimating the inclination of a road)", with the filing date 20 February 2006, which describes a device for estimating the inclination of a ground on which a vehicle is traveling. The device includes means for receiving at least a first parameter value which constitutes a representation of a first inclination estimation, or by means of which a first estimation of the inclination of the ground can be generated, and means for receiving at least a second parameter value, which constitutes a representation of a second inclination estimation, or by which a second estimation of the inclination of the ground can be generated. The device further comprises means for generating an estimation of the inclination weighted by said parameter values, wherein the device further includes means for determining the respective impact of said parameter values on said weighted estimation of the inclination, wherein said weighting is arranged to be controlled by variations in the reliability of the parameter values. The weighted estimation can be carried out using a statistical filter such as a Kalman filter or an expanded Kalman filter. The said parameter values can be arranged to consist of data from at least two from the group: satellite positioning system, pressure sensor, mechanical inclination sensor, accelerometer, a model of the dynamics of the vehicle in the direction of movement, inclination information from a map. This device has the advantage that by controlling the influence of the various parameter values that are used based on reliability, a very good estimation of the inclination of the ground of the vehicle can be obtained.

If information about horizontal and vertical curves is combined, the geometry of the distance the vehicle has traveled can be described in 3D. Apart from historically describing the recently passed distance, a current image of the current traffic environment can also be made. An example is: "left-hand turn in crossing, so far 61°, radius 12 meters is being undertaken".

An example of a sequence of segments consists of: a vehicle has traveled "82 meters downhill a 3 % slope to then, after 120 meters level straight stretch having turned 77° to the left in a roundabout with a 42 meters radius into a 30 meters long straight stretch followed by a right-hand turn with the radius 300 meters and the arc length 100 meters".

Examples of different vehicle surrounding situations that can be identified and distinguished from received data are shown below:
- Idle driving
- Power take off (PTO)
- Marshalling
- Queue
- City centre
- Urban area
- Undulated and/or curved road
- Straight and level road

As is realized, a number of different types of vehicle surrounding situations can also be defined as required.

To be able to determine which of the above situation that is the most likely from the received data, the following exemplary criteria can be used in the evaluation:
A. Current speed [km/h]
B. Average speed, the last 60 s [km/h]
C. Average speed, the last 300 s [km/h]
D. Curvature - how large part of the road's last 5 km that has turned more than 0,04 rad/s [%]
E. Degree of winding - the sum of the absolute amount of all changes of angle exceeding, for example, 0,04 rad/s the last 5 km. [°] (Explanation: If the vehicle was traveling in a certain direction 5 km earlier and is still traveling in the same direction but has passed a great number of curves since then we will have a high degree of winding.)
F. Undulation - How great the variation in slope has been the last, e.g., 2 minutes.
G. Number of stops the last x km, e.g. 2 km [number]
H. Distance to the previous stop [m]
I. Time lapsed since the vehicle reversed [s]
J. Number of U-turns the last 3 minutes [number]
K. Number of crossings per kilometer - the last x km, e.g. 2 [number]
L. Number of roundabouts per kilometer - the last x km, e.g. 2 [number]
M. The active power take off of the vehicle.

Below is a list of examples of circumstances that elevates the probability for the different environments. The one having the most part of its demands fulfilled is considered as the most likely environment, and is thus considered to represent the current surrounding of the vehicle. All demands does not have to be fulfilled, but the greater part of the demands being fulfilled, the more likely it is that the environment in question also prevails. Furthermore, input data is weighted differently in every determination. For example, the importance of G can be particularly large in a determination of a queue. The letters are put in relation to the magnitudes A-L above.
- Idle driving
   0<A<5, 2<B<5, O<C<5
- Power Take Off (PTO)
   M=1
- Marshalling
   2<A<15, 2<B<15, 2<G<30, 0<I<180, 1<J<15, 3000<E<15000
- Queue
   G>2, E<2000, 5<A<25, 5<B<25, 5<C<25
- City centre
   10<A<60, 1O<B<60, 10<C<60, 2<G<10, 2<K<100
- Urban area
   40<A<65, 40<B<65, 40<C<65, 3<G<6, 1<K<3, 1<L<3
- Undulated and/or curved road
   5O<A<95, 50<B<95, 5O<C<95, G<2, K<3, 5<D<6O, 5O<E<1500, 10<F<70
- Straight and level road
   65<A<120, 65<B<12O, 65<C<120, G<2, H>4000, D<15, E<30, F<17, K<2

Preferably, these probabilities are low pass filtered so that changes in input data takes a few seconds before they have influence in a new surrounding.

The above described solution for describing the surrounding of the vehicle has a large number of advantages as compared to existing solutions:
- The invention can describe the trail that the journey of the vehicle describes in three dimensions and its current position, and express this trail in terms that are easily understood and familiar to common people, alternatively in technical terms such as the magnitude of the curve radiuses in the three dimensions of space.
- No information from either positioning systems or map data bases is required.
- The invention provides statements about the traffic environment that have a higher certainty by describing what is in fact the actual geometry, and not, for example, an interpretation from map data or a matching with a sequence of extreme points in acceleration signals.
- No previously defined knowledge about how a landscape in question looks like is required, but quite the opposite, this knowledge is created.
- Information about the traffic environment in question can be given in real time. An element does not have to be finished to be able to determine that the vehicle is in the element.

The information provided by the present invention about the position of the vehicle and its movements in three dimensions creates an array of opportunities. For example, the ability of the driver to drive a vehicle in the traffic environment in question can be determined, an increased security for the driver, passengers, load and surroundings can be provided, and the environment in which the vehicle has traveled can be displayed in an accurate fashion. The invention can also provide sales organizations with support regarding future vehicle acquirements and service.

In the parallel Swedish Patent Application 0601175-3 entitled "Anordning for bestämning av förutseendeförmåga (in English: Device for determining an anticipation ability)", and having the same filing date as the present invention, a solution for determining an anticipation ability of a vehicle is described, wherein the present invention advantageously can be utilized, since, for an increased significance, these performances should be placed in relation to actual traffic geometry in order to be able to perform a more accurate determination.

Further, in the parallel Swedish Patent Application 0601173-8 entitled "Anordning for bromsslitagebedomning (in English: Device for brake wear assessment)" and having the same filing date as the present application, a solution to assess a driver's ability to select the correct brake system is described, wherein the present invention advantageously can be utilized. This assessment can be performed significantly better with knowledge about the inclination and curvature of the surroundings. For example, it can happen that a certain braking system should be premiered in downhill slopes and another braking system should be premiered in urban traffic.

In the parallel Swedish Patent Application 0601174-6 entitled "Anordning for bestamning av ett bränsleförbrukningsbeteende (in English: Device for determining a fuel consumption behavior)" and having the same filing date as the above application, a solution is described wherein the present invention advantageously can be utilized with a device for assessing the ability of the driver to drive with a low fuel consumption by studying the driver's consumption in special circumstances, such as the top of a hill, valleys and downhill slopes.

Further examples of fields of the invention consist of activating security enhancing functions by using information about present potentially accident prone traffic situations, for example a left-hand turn on a freeway after a top of a hill. Examples of such functions are preparing airbags, avoiding providing the driver with unnecessary information (information hold) among many other things.

Qualified drive data, with information about which traffic environment the vehicle has been traveling in, can be used by service shops for finding causes to possible faults or breakdowns, as well as by sales organizations to be able to deliver a custom-made product for the customer's normal use. This includes choosing a motor from alternatives, intervals of service etc.

As is realized, the vehicle can be arranged to continuously transfer data, e.g., by means of a mobile communication system, to an external monitoring means, such as a monitoring central, whereby the above assessment can be performed in the surveillance central instead of inside the vehicle, either both a surroundings classification and a type determination, or only the surroundings classification.

Furthermore, the present invention can be used to generate map data bases. For example, segment data can be gathered together with absolute positions to, combined, result in a map data base having a very high accuracy.

## Claims

1. Device (200) for determining the type of a vehicle surrounding for a distance along which a vehicle (100) travels, wherein the device (200) comprises:
- means for dividing the distance into segments,
- means for determining that a segment has been started,
- means for determining a reference direction of movement,
- means for, during said segment, receiving at least one direction parameter value, which constitutes a representation of the direction of movement of the vehicle, or by which a representation of the direction of the movement of the vehicle (100) can be determined,
- means for determining if the vehicle (100) has reached the end of the segment,
- means for determining the type of the segment from said received direction parameter values, wherein the device (200) further includes means for determining the type of a plurality of consecutive or adjacent segments,
**characterized in that** the device (200) further includes means for classifying said distance on the basis of said plurality of type determined segments and wherein the determination of the segment type is based on the direction parameter values that are received in relation to certain defined criteria, and from this, probability values are assigned for each of the different situations of the vehicle (100) surrounding and the situation with the highest probability, it results in the definition of the most likely environment,
wherein said means for determining that the vehicle (100) has reached the end of the segment is arranged to perform said determination based on a change of direction, and wherein said change of direction is horizontal and/or vertical.

2. Device (200) according to claim 1, wherein it further includes means for storing said direction parameter values received during the segment.

3. Device (200) according to claim 1 or 2, wherein it further comprises means for storing the type of the segment with a reference for the segment.

4. Device (200) according to any of the claims 1-3, **characterized in that** said parameter values are generated by vehicle internal sensors (201, 202, 203, 204, 205).

5. Device (200) according to any of the preceding claims, wherein the device (200) includes means for receiving parameter values or from which parameter values can be calculated, said parameter values representing one or more from the group: the distance traveled by the vehicle during the segment (arc length), a radius of the movement performed by the vehicle during the segment, the momentary and/or average speed of the vehicle during the segment.

6. Device (200) according to any of the preceding claims, **characterized in that** said segment type consists of any from the group: right-hand turn, left-hand turn, right-hand curve, left-hand curve, straight stretch, roundabout, top of a hill, valley, crossing, right-hand turn in crossing, left-hand turn in crossing, level road, uphill, downhill.

7. Device (200) according to any of the preceding claims, **characterized in that** it further comprises output means (212) for output of said segment type determination to display means or sound reproducing means in said vehicle and/or a remote monitoring means.

8. Device (200) according to claim 1, **characterized in that** it further comprises output means (212) for output of said classification of said distance to display means or sound reproducing means in said vehicle and/or a remote monitoring means.

9. Device (200) according to any of the preceding claims, **characterized in that** said classification consists of any of the group: idle driving, power take off (PTO), marshalling, queue, inner city, city, undulated and/or straight or level or curving road, straight and level or undulated road.

10. Device (200) according to any of the preceding claims, **characterized in that** one or more of said means at least partially is constituted by a computer program, wherein the device (200) at least partially is constituted by a computer program product including a computer-readable medium and a computer program, wherein the computer program is included in the computer-readable medium.

11. Device (200) according to claim 1, **characterized in that** said determination of the type of a segment from said received direction parameter values is arranged to be started from predetermined criteria.

12. Device (200) according to claim 10, **characterized in that** said computer-readable medium is constituted by one or more from the group: ROM (Read-Only Memory), PROM (Programmable Read-Only Memory), EPROM (Erasable PROM), Flash memory, EEPROM (Electrically Erasable PROM).

## Patentansprüche

1. Einrichtung (200) zur Bestimmung der Art einer Fahrzeugumgebung für eine Strecke, entlang derer ein Fahrzeug (100) fährt, wobei die Einrichtung (200) aufweist:
- eine Einrichtung zum Unterteilen der Strecke in Teilstücke,
- eine Einrichtung zur Feststellung, dass ein Teilstück begonnen hat,
- eine Einrichtung zur Ermittlung einer Referenzbewegungsrichtung,
- eine Einrichtung zum Empfangen, während des Teilstücks, wenigstens eines Richtungsparameterwertes, der eine Repräsentation der Bewegungsrichtung des Fahrzeugs darstellt oder durch den eine Repräsentation der Bewegungsrichtung des Fahrzeugs (100) bestimmt werden kann,
- eine Einrichtung zum Feststellen, ob das Fahrzeug (100) das Ende des Teilstücks erreicht hat,
- eine Einrichtung zur Ermittlung des Typs des Teilstücks aus den empfangenen Richtungsparameterwerten, wobei die Einrichtung (200) ferner eine Einrichtung zur Ermittlung des Typs mehrerer aufeinanderfolgender oder benachbarter Teilstücke aufweist,
**dadurch gekennzeichnet, dass** die Einrichtung (200) ferner eine Einrichtung zum Klassifizieren der Strecke auf der Basis der mehreren hinsichtlich ihres Typs bestimmten Teilstücke umfasst, wobei die Ermittlung des Teilstücktyps auf den Richtungsparameterwerten basiert, die hinsichtlich bestimmter definierter Kriterien empfangen werden, und daraus Wahrscheinlichkeitswerte für jede der verschiedenen Situationen der Fahrzeugumgebung zugewiesen werden und die Situation mit der höchsten Wahrscheinlichkeit zu der Festlegung der wahrscheinlichsten Umgebung führt, wobei die Einrichtung zur Feststellung, dass das Fahrzeug (100) das Ende des Teilstücks erreicht hat, dazu vorgesehen ist, diese Feststellung basierend auf einer Richtungsänderung zu treffen, wobei die Richtungsänderung horizontal und/oder vertikal ist.

2. Einrichtung (200) nach Anspruch 1, wobei sie ferner eine Einrichtung zum Speichern der während des Teilstücks empfangenen Richtungsparameterwerte aufweist.

3. Einrichtung (200) nach Anspruch 1 oder 2, wobei sie ferner eine Einrichtung zum Speichern des Typs des Teilstücks mit einem Verweis auf das Teilstück aufweist.

4. Einrichtung (200) nach einem der Ansprüche 1 bis 3, **dadurch gekennzeichnet, dass** die Parameterwerte durch fahrzeuginterne Sensoren (201, 202, 203, 204, 205) erzeugt werden.

5. Einrichtung (200) nach einem der vorhergehenden Ansprüche, wobei die Einrichtung (200) eine Einrichtung zum Empfangen von Parameterwerten oder aus denen Parameterwerte berechnet werden können umfasst, wobei die Parameterwerte eines oder mehreres repräsentieren aus der Gruppe:
die von dem Fahrzeug während des Teilstücks befahrenen Wegstrecke (Bogenlänge), ein Radius der von dem Fahrzeug während des Teilstücks ausgeführten Bewegung, die Momentan- und/oder Durchschnittsgeschwindigkeit des Fahrzeugs während des Teilstücks.

6. Einrichtung (200) nach einem der vorhergehenden Ansprüche, **dadurch gekennzeichnet, dass** der Teilstücktyp aus einem beliebigen besteht aus der Gruppe: Rechtsabbiegung, Linksabbiegung, Rechtskurve, Linkskurve, gerade Strecke, Kreisverkehr, Berggipfel, Tal, Kreuzung, Rechtsabbiegung in einer Kreuzung, Linksabbiegung in einer Kreuzung, ebene Straße, bergauf, bergab.

7. Einrichtung (200) nach einem der vorhergehenden Ansprüche, **dadurch gekennzeichnet, dass** sie ferner eine Ausgabeeinrichtung (212) aufweist zur Ausgabe der Teilstücktypbestimmung auf eine Anzeigeeinrichtung oder Tonwiedergabeeinrichtung in dem Fahrzeug und/oder einer Fernüberwachungseinrichtung.

8. Einrichtung (200) nach Anspruch 1, **dadurch gekennzeichnet, dass** sie ferner eine Ausgabeeinrichtung (212) zur Ausgabe der Klassifizierung der Strecke auf eine Anzeigeeinrichtung oder Tonwiedergabeeinrichtung in dem Fahrzeug und/oder einer Fernüberwachungseinrichtung aufweist.

9. Einrichtung (200) nach einem der vorhergehenden Ansprüche, **dadurch gekennzeichnet, dass** die Klassifizierung aus einem beliebigen besteht aus der Gruppe: im Leerlauf fahrend, Nebenantrieb (PTO = power take-off), Rangieren, Stau, Innenstadt, Stadt, gewellte und/oder gerade oder ebene oder kurvige Straße, gerade und ebene oder gewellte Straße.

10. Einrichtung (200) nach einem der vorhergehenden Ansprüche, **dadurch gekennzeichnet, dass** eine oder mehrere der Einrichtungen zumindest zum Teil durch ein Computerprogramm gebildet ist, wobei die Einrichtung (200) zumindest zum Teil durch ein Computerprogrammprodukt gebildet ist, das ein computerlesbares Medium und ein Computerprogramm enthält, wobei das Computerprogramm in dem computerlesbaren Medium enthalten ist.

11. Einrichtung (200) nach Anspruch 1, **dadurch gekennzeichnet, dass** die Ermittlung des Typs eines Teilstücks aus den empfangenen Richtungsparameterwerten dazu vorgesehen ist, von vorbestimmten Kriterien auszugehen.

12. Einrichtung (200) nach Anspruch 10, **dadurch gekennzeichnet, dass** das computerlesbare Medium durch eines oder mehreres gebildet ist aus der Gruppe: ROM (Nurlesespeicher), PROM (programmierbarer Nurlesespeicher), EPROM (löschbarer programmierbarer Nurlesespeicher), Flash-Speicher, EEPROM (elektrisch löschbarer programmierbarer Nurlesespeicher).

## Revendications

1. Dispositif (200) pour la détermination du type d'un véhicule environnant sur une distance sur laquelle un véhicule (100) se déplace, dans lequel le dispositif (200) comprend :
- des moyens pour la division de la distance en segments,
- des moyens pour la détermination qu'un segment a été démarré,
- des moyens pour la détermination d'une direction de référence de mouvement,
- des moyens pour, durant ledit segment, la réception d'au moins une valeur de paramètre de direction, qui constitue une représentation de la direction de mouvement du véhicule, ou par laquelle une représentation de la direction du mouvement du véhicule (100) peut être déterminée,
- des moyens pour la détermination de si le véhicule (100) a atteint la fin du segment,
- des moyens pour la détermination du type du segment à partir desdites valeurs de paramètre de direction reçues, dans lesquels le dispositif (200) comprend en outre des moyens pour la détermination du type d'une pluralité de segments consécutifs ou adjacents,
**caractérisés en ce que** le dispositif (200) comprend en outre des moyens pour la classification de ladite distance sur la base de ladite pluralité de segments d'un type déterminé et dans lesquels la détermination du type de segment est sur base des valeurs de paramètre qui sont reçues par rapport à certains critères définis, et à partir de ceci, des valeurs de probabilité sont assignées pour chacune des différentes situations du véhicule (100) environnant et la situation avec la plus forte probabilité, ce qui entraîne la définition de l'environnement le plus probable,
dans lequel lesdits moyens pour la détermination que le véhicule (100) a atteint la fin du segment sont agencés pour effectuer ladite détermination sur base d'un changement de direction, et dans lequel ledit changement de direction est horizontal et/ ou vertical.

2. Dispositif (200) selon la revendication 1, dans lequel il comprend en outre des moyens pour le stockage desdites valeurs de paramètre de direction reçues durant le segment.

3. Dispositif (200) selon la revendication 1 ou 2, dans lequel il comprend en outre des moyens pour le stockage du type du segment avec une référence pour le segment.

4. Dispositif (200) selon l'une quelconque des revendications 1-3, **caractérisé en ce que** lesdites valeurs de paramètre sont générées par des capteurs internes de véhicule (201, 202, 203, 204, 205).

5. Dispositif (200) selon l'une quelconque des revendications précédentes, dans lequel le dispositif (200) comprend des moyens pour la réception de valeurs de paramètre ou à partir duquel des valeurs de paramètre peuvent être calculées, lesdites valeurs de paramètre représentant-une ou plusieurs parmi le groupe de :
la distance parcourue par le véhicule durant le segment (longueur de l'arc), un rayon du mouvement effectué par le véhicule durant le segment, la vitesse momentanée et/ ou moyenne du véhicule durant le segment.

6. Dispositif (200) selon l'une quelconque des revendications précédentes, **caractérisé en ce que** ledit type de segment se compose de l'un quelconque parmi le groupe de : virage à droite, virage à gauche, courbe à droite, courbe à gauche, tronçon droit, rond-point, haut d'une colline, vallée, croisement, virage à droite au croisement, virage à gauche au croisement, une route plane, une montée, une descente.

7. Dispositif (200) selon l'une quelconque des revendications précédentes, **caractérisé en ce qu'**il comprend en outre des moyens de sortie (212) pour une sortie de ladite détermination de type de segment pour afficher des moyens ou des moyens de reproduction de son dans ledit véhicule et/ ou des moyen de surveillance à distance.

8. Dispositif (200) selon la revendication 1, **caractérisé en ce qu'**il comprend en outre des moyens de sortie (212) pour la sortie de ladite classification de ladite distance pour afficher des moyens ou des moyens de reproduction du son dans ledit véhicule et/ ou des moyens de surveillance à distance.

9. Dispositif (200) selon l'une quelconque des revendications précédentes, **caractérisé en ce que** ladite classification se compose de l'un quelconque parmi le groupe de :
conduite au ralenti, prise de force (PTO), triage, file d'attente, centre-ville, ville, ondulé et/ ou droit ou plat ou route sinueuse, route droite et plane ou route ondulée.

10. Dispositif (200) selon l'une quelconque des revendications précédentes, **caractérisé en ce qu'**un ou plusieurs desdits moyens, au moins partiellement sont constitués par un programme informatique, dans lequel le dispositif (200) au moins partiellement est constitué par un produit de programme informatique comprenant un support lisible par ordinateur et un programme informatique, dans lequel le programme informatique est inclus dans le support lisible par ordinateur.

11. Dispositif (200) selon la revendication 1, **caractérisé en ce que** ladite détermination du type d'un segment à partir desdites valeurs de paramètre de direction reçues est agencée pour être démarrée à partir de critères prédéterminés.

12. Dispositif (200) selon la revendication 10, **caractérisé en ce que** ledit support lisible par ordinateur est constitué par un ou plusieurs parmi le groupe : ROM (mémoire morte), PROM (Mémoire Morte Programmable), EPROM (PROM Effaçable), mémoire Flash, EEPROM (PROM Effaçable Électriquement).
